Europäisches Patentamt

European Patent Office

Office européen des brevets

(19)

(11) Numéro de publication: **0 103 311**
**A2**

# (12) DEMANDE DE BREVET EUROPEEN

(21) Numéro de dépôt: **83200298.4**

(51) Int. Cl.³: **B 32 B 3/12**

(22) Date de dépôt: **28.02.83**

(30) Priorité: **31.08.82 BE 2059815**

(71) Demandeur: **FABRIQUE NATIONALE HERSTAL en abrégé FN Société Anonyme, B-4400 Herstal (BE)**

(43) Date de publication de la demande: **21.03.84 Bulletin 84/12**

(72) Inventeur: **Vanhoutte, Jan E., Stoppelbilk 4, B-8310 Brugge (BE)**

(84) Etats contractants désignés: **AT CH DE FR GB IT LI LU NL SE**

(74) Mandataire: **Bockstael, Daniel, M.F.J. Bockstael Arenbergstraat 13, B-2000 Anvers (BE)**

(54) **Elément tubulaire renforcé par nid d'abeille et son procédé de fabrication.**

(57) Elément tubulaire renforcé par nid d'abeille, caractérisé en ce qu'il est substantiellement constitué par un élément tubulaire (1) proprement dit doté d'un noyau (2A) ou âme en nid d'abeille (2B), ce dernier étant au moins localement solidarisé par collage à la paroi interne dudit élément.

EP 0 103 311 A2

1

"Elément tubulaire renforcé par nid d'abeille et son procédé de fabrication"

La présente invention concerne un élément tubulaire renforcé par nid d'abeille, susceptible d'un grand nombre d'applications avantageuses dans des domaines divers. L'invention concerne également un procédé pour la fabrication d'un tel élément.

Jusqu'à présent, des nappes en nid d'abeille réalisées en matériaux divers tels que métaux, plastiques, carton etc., ont principalement été utilisées comme couches médianes ou intercallaires dans des panneaux sandwich plans.

Il est bien connu que l'emploi desdites nappes confère aux produits finis des propriétés mécaniques particulièrement intéressantes eu égard au poids relativement minime des nappes utilisées. Ainsi, la rigidité, la résistance à la compression, la résistance à la fatigue, l'amortissement des vibrations etc., atteignent des valeurs très avantageuses.

Les caractéristiques conférées par le nid d'abeille ont également été mises à profit dans la fabrication de raquettes de tennis. Ainsi, des raquettes sont actuellement dans le commerce, qui sont constituées de deux coquilles métalliques identiques enserrant un ruban de nid d'abeille métallique, le tout étant assemblé par collage (voir brevet belge n° 856.598).

2 0103311

On a également proposé de réaliser des cadres de raquettes
composites dans lesquels sont noyés deux rubans de nid d'abeille, situés de part et d'autre d'une âme en une matière synthétique gonflante (voir demande de brevet européen n° 82201002.1).

Partant de cet état de la technique, la Demanderesse a imaginé et mis au point un matériau nouveau, susceptible d'un
grand nombre d'applications vu le rapport particulièrement
avantageux entre ses propriétés mécaniques et son poids
spécifique.

Ce matériau nouveau est substantiellement constitué par un
élément tubulaire doté d'un noyau ou âme en nid d'abeille, ce
dernier étant au moins localement solidarisé par collage à la
paroi interne dudit élément.

L'élément tubulaire peut être réalisé en toute matière adéquate, eu égard à l'utilisation envisagée. Il en va de même
pour le nid d'abeille.

Ainsi, l'élément tubulaire peut être métallique ou être réalisé en une matière synthétique, en carton etc. Sa section
peut soit être constante, soit progressivement décroissante
d'un bout à l'autre de l'élément. Alternativement, l'élément
pourrait être rétreint. Ce qui précède vaut également pour
le nid d'abeille.

Le procédé selon l'invention pour la réalisation de l'élément
renforcé susdécrit consiste substantiellement : à partir d'un
élément tubulaire et d'un nid d'abeille comprimé; le cas
échéant, à usiner ledit nid d'abeille comprimé, pour lui
donner une forme correspondant substantiellement à celle de
l'âme dudit élément tubulaire; à déployer ledit nid d'abeille
pour l'amener à la longueur dudit élément tubulaire; à doter
au moins localement ledit nid d'abeille d'une ou plusieurs
couches d'adhésif; à insérer ledit nid d'abeille dans ledit
élément tubulaire, sur au moins une partie de la longueur de ce dernier; enfin, à assurer la prise dudit adhésif.

Pour plus de clarté, certains aspects de l'invention seront décrits plus en détail ci-après, avec référence aux dessins schématiques annexés, dans lesquels :

la figure 1 est une vue perspective partielle d'un élément tubulaire à renforcer;
la figure 2 est une vue perspective partielle d'un nid d'abeille comprimé;
la figure 3 représente le nid d'abeille selon la figure 2, après usinage;
la figure 4 représente l'une des étapes du procédé selon l'invention.

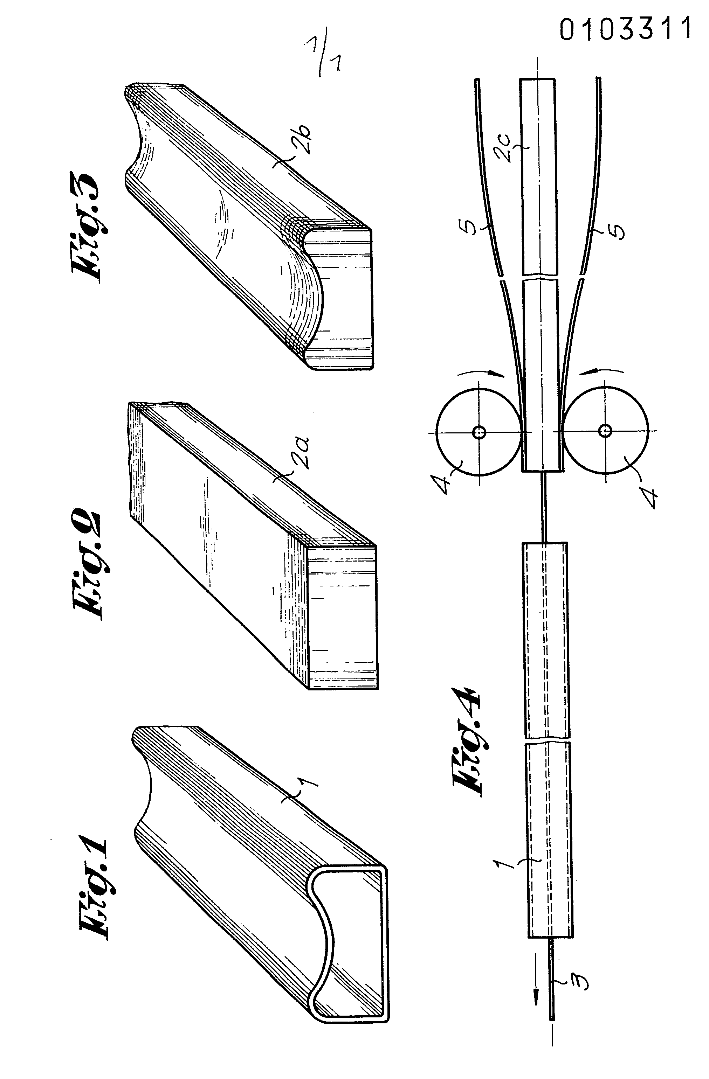

Conformément à l'invention, on part d'un élément tubulaire 1 ainsi que d'un prisme de nid d'abeille comprimé 2A. Ce dernier est d'abord, dans l'exemple représenté, usiné pour préparer la conformité de sa section à celle de l'âme de l'élément tubulaire 1, comme représenté en 2B à la figure 3.

Le nid d'abeille comprimé et usiné 2B est ensuite axialement déployé, respectivement étiré, de sorte que sa longueur devienne en l'occurrence égale à celle de l'élément tubulaire 1, comme représenté en 2C à la figure 4.

Une tige ou câble de traction 3, traversant l'élément 1, est attaché temporairement à une extrémité du nid d'abeille déployé 2C, extrémité engagée entre deux rouleaux d'entraînement 4.

Un ruban 5 de préférence de matière adhésive sèche est prévu, lequel recouvre à l'occurrence deux faces opposées du nid d'abeille 2C.

Une traction est exercée sur la tige ou câble 3, en synchronisme avec l'entraînement des rouleaux 4. Le nid d'abeil-

4

0103311

le 2C est ainsi inséré dans l'élément 1 qu'il occupe entièrement ou non au terme de l'insertion.

L'ensemble 1, 2C et 5 est ensuite mis au four afin de provoquer la gélification du ruban 5, puis refroidi afin d'obtenir une liaison adéquate entre le nid d'abeille et la paroi interne de l'élément 1.

On obtient ainsi un élément tubulaire renforcé susceptible d'être utilisé avantageusement dans un grand nombre d'applications différentes, telles que par exemple cadres de raquettes de tennis, mâts de voiliers non-haubannés, armatures diverses, entretoises et supports, cette énumération étant loin d'être exhaustive.

Les avantages mécaniques d'un élément tubulaire renforcé selon l'invention sont nombreux, les caractéristiques suivantes pouvant être améliorées par rapport à celles d'un profilé tubulaire non armé de même poids total :

- rigidité ou résistance à la flexion (selon deux axes);
- résistance à la compression (perpendiculairement à l'axe longitudinal de l'élément tubulaire);
- amortissement des vibrations (en outre par la présence de l'adhésif);
- résistance à la fatigue.

Ab contrario, pour des caractéristiques mécaniques données, un élément renforcé conforme à l'invention présentera un poids moindre qu'un élément tubulaire classique, non renforcé.

Un élément selon l'invention présente également l'avantage de pouvoir être facilement cintré, sans que des déformations parasitaires de la paroi de l'élément tubulaire proprement dit n'interviennent.

Il est certain que de nombreuses modifications peuvent être apportées à l'exemple sus-décrit, sans pour autant sortir du cadre de l'invention.

Ainsi, l'élément tubulaire 1 pourrait avoir des sections similaires mais de surfaces décroissantes d'une de ses extrémités à l'autre, soit de façon continue, soit par saut(s), le nid d'abeille comprimé 2B étant alors usiné en conséquence.

Des discontinuités dans l'évolution des sections peuvent également être prévues, en fonction du formage ultérieur de l'élément renforcé.

L'adhésif peut être appliqué sur toute la périphérie du nid d'abeille déployé 2C ou seulement sur certaines parties choisies de cette dernière.

On peut également jouer sur les vitesses d'entraînement de la tige ou câble 3 d'une part, et des rouleaux 4 d'autre part, afin d'obtenir différentes formes de cellules du nid d'abeille : hexagone régulier, hexagone étiré ou hexagone applati.

Revendications.

1.- Elément tubulaire renforcé par nid d'abeille, caractérisé en ce qu'il est substantiellement constitué par un élément tubulaire (1) proprement dit doté d'un noyau (2A) ou âme en nid d'abeille (2B), ce dernier étant au moins localement solidarisé par collage à la paroi interne dudit élément.

2.- Elément tubulaire renforcé selon la revendication 1, caractérisé en ce que ledit élément tubulaire proprement dit (1) présente une section droite constante sur toute sa longueur.

3.- Elément tubulaire renforcé selon la revendication 1, caractérisé en ce que ledit élément tubulaire proprement dit (1) présente des sections droites de surfaces décroissantes, de façon continue ou par palliers, d'une de ses extrémités vers l'autre.

4.- Elément tubulaire renforcé selon l'une des revendications 1 à 3, caractérisé en ce que ledit nid d'abeille (2A) est conformé pour remplir l'entièreté du volume interne de l'élément tubulaire proprement dit (1).

5.- Elément tubulaire renforcé selon l'une des revendications 1 à 3, caractérisé en ce que ledit nid d'abeille (2A) est conformé pour ne remplir qu'une partie du volume interne de l'élément tubulaire proprement dit (1), les dimensions et localisations des vides subsistants étant fonction de l'utilisation ultérieure dudit élément renforcé.

6.- Elément selon l'une ou plusieurs des revendications 1 à 5, caractérisé en ce que ledit nid d'abeille (2A) est solidarisé au moins localement à la paroi interne dudit élément tubulaire proprement dit (1) par un adhésif.

7.- Procédé pour la réalisation d'un élément tubulaire renforcé selon l'une ou plusieurs des revendications 1 à 6, caractérisé en ce qu'il consiste substantiellement : à partir d'un élément tubulaire (1) et d'un nid d'abeille comprimé (2A); le cas échéant, à usiner ledit nid d'abeille comprimé, pour lui donner une forme correspondant substantiellement à celle de l'âme dudit élément tubulaire; à déployer ledit nid d'abeille pour l'amener à la longueur dudit élément tubulaire; à doter au moins localement ledit nid d'abeille d'une ou plusieurs couches d'adhésif; à insérer ledit nid d'abeille dans ledit élément tubulaire, sur au moins une partie de la longueur de ce dernier; enfin, à assurer la prise dudit adhésif.

8.- Procédé selon la revendication 7, caractérisé en ce que le susdit nid d'abeille (2A) est inséré dans ledit élément tubulaire (1), sur toute la longueur de ce dernier.

9.- Procédé selon la revendication 7 ou 8, caractérisé en ce que l'insertion dudit nid d'abeille (2A) dans l'élément tubulaire (1) s'effectue par traction sur une extrémité du nid d'abeille et par poussée sur ce dernier, en amont de ladite extrémité par rapport au sens d'insertion.

10.- Procédé selon la revendication 9, caractérisé en ce que traction et poussée s'effectuent à la même vitesse linéaire.

11.- Procédé selon la revendication 9, caractérisé en ce que traction et poussée s'effectuent à des vitesses linéaires mutuellement différentes.

12.- Procédé selon la revendication 7 ou 8, caractérisé en ce que l'adhésif est amené à l'état sec sur le nid d'abeille (2A) avant insertion de ce dernier dans ledit élément tubulaire proprement dit (1), l'ensemble étant chauffé après ladite insertion jusqu'à température de ramollissement dudit adhésif, puis refroidi jusqu'à la prise de ce dernier.

0103311

Fig.1

Fig.2

Fig.3

Fig.4